# EUROPÄISCHE PATENTSCHRIFT

(11) **EP 0 806 150 B1**
(45) Veröffentlichungstag und Bekanntmachung des Hinweises auf die Patenterteilung: **11.12.2002**
(21) Anmeldenummer: 97107524.7
(22) Anmeldetag: 07.05.1997
(51) Int. Cl.: A23G 1/28, A23G 3/02, A23G 7/00, B29C 39/36

(54) **Austafeleinrichtung für eine Einformanlage für Schokolade oder ähnliche Erzeugnisse**
Demoulding device for moulding machine for chocolate or the same
Dispositif de démoulage pour installation de moulage de chocolat ou analogue

(30) Priorität: 09.05.1996 IT MI960932
(43) Veröffentlichungstag der Anmeldung: 12.11.1997
(73) Patentinhaber: CARLE & MONTANARI S.p.A., 20089 Rozzano (IT)
(72) Erfinder: Giuliano, Agostino, Rozzano (IT)
(74) Vertreter: Mayer, Hans Benno, Dipl.-Ing.

(56) Entgegenhaltungen:
- DE-B- 1 049 686
- DE-C- 430 131
- DE-C- 692 792
- FR-A- 2 182 250
- US-A- 4 128 377

## Beschreibung

Die Erfindung betrifft eine Austafeleinrichtung für eine Einformanlage für Schokolade oder ähnliche Erzeugnisse, die intermittierend arbeitet und mit frei angeordneten Formen ausgerüstet ist, d.h., mit Formen, die von parallel angeordneten Förderketten gelöst werden können.

Dem auf diesem Gebiet tätigen Fachmann ist die Tatsache bekannt, dass Einformanlagen für Schokolade oder ähnliche Erzeugnisse aus mehreren Abteilungen bestehen, die jeweils zur Durchführung eines ganz bestimmten Arbeitsvorganges vorgesehen sind.

So ist ein Bereich der Einformanlage zur Aufbereitung der leeren Formen bestimmt, ein anderer Bereich dient zum Einbringen der Formmasse in die Ausnehmungen der Formen, anschliessend sind Geräte zum Rütteln und Abspachteln der teigartigen Formmasse von den Formen, sowie eine Kühleinrichtung, in der die eingebrachte Masse verfestigt wird, und eine Einrichtung zum Austafeln der verfestigten Erzeugnisse aus den Formen vorgesehen, wobei dieser letzte Arbeitsvorgang auch als Austafelungsvorgang bezeichnet wird. Zum Entnehmen der verfestigten Erzeugnissse aus den Formen (Austafelung) werden die Formen bekanntlich umgestürzt und zu diesem Zweck werden geeignete Wendevorrichtungen eingesetzt.

Mit anderen, bereits bekannten Mitteln wird der Formboden mit geeigneten Schlag- oder Rüttelvorrichtungen beinflusst, so dass die verfestigten Erzeugnissse auf ein Förderband fallen, das zum Abtransport der ausgeformten Erzeugnisse und zur Weiterleitung derselben an eine Verpackungseinrichtung dient.

Nachdem die verfestigten Erzeugnisse aus der Form entnommen worden sind, muss die leere Form erneut gestürzt werden, um sicherzustellen, dass die Öffnungen ihrer Ausnehmungen nach oben gerichtet sind, dann wird die Form zu dem aus zwei parallel angeordneten Ketten bestehenden Kreislauf zurückgeführt und nach Durchlaufen verschiedener Behandlungseinrichtungen werden die Formen zur Ausgangsstelle der Formgebungsanlage zurückgebracht.

Aus mechanischen Gründen wird die Form bei den bekannten, intermittierend arbeitenden Eintafelanlagen nach der Ausformstation der Erzeugnisse in der Regel von einem rechtwinklig zur Vorschubrichtung der Form angeordneten Förderer aufgenommen und im Anschluss daran wird die leere Form an eine, aus parallel angeordneten Förderketten bestehenden und in umgekehrter Richtung verlaufenden Bahn überführt.

Eine weitere bekannte Lösung sieht vor, dass die Form aus einem Förderer entnommen und in eine Rücklaufbahn zurückgebracht wird, die in einer Ebene vorgesehen ist, die über jener Ebene liegt, in der sich die aus der Einformanlage kommenden Formbleche befinden (vgl. z.B. DE 1049686 B).

Alle bekannten Anlagen dieser Art haben den Nachteil, dass ein beträchtlicher Raum zur Verfügung stehen muss, da die Einformanlage auf zwei parallel verlaufenden Bahnen angeordnet ist, die durch querlaufende Förderelemente miteinander verbunden sind und das Ganze in einem rechteckigen Bereich und mit nicht zugänglicher Innenseite montiert ist.

In einem anderen Fall übersteigt die erforderliche Bauhöhe die grössten in den üblichen Produktionsanlagen tatsächlich zur Verfügung stehenden Abmessungen.

Der Erfindung liegt die Aufgabe zugrunde, die beschriebenen und zum Stand der Technik gehörenden Nachteile zu beseitigen und eine Austafeleinrichtung für intermittierend bewegte und Schokolade oder ähnliche Erzeugnisse enthaltende Formen vorzuschlagen, die äusserst raumsparend aufgebaut ist und sich vollständig in einer geschlossenen und abgekapselten Baueinheit unterbringen lässt.

Erfindungsgemäss wird diese Aufgabe dadurch gelöst, dass im Inneren eines Raumes der Austafeleinrichtung ein Umlenkrad vorgesehen ist, über das eine Kette geführt ist, die mit ihrem oberen Trumm die mit Schokolade gefüllte Formen anfördert, dass das untere Trumm der Kette zur Abfuhr der leeren Formen vorgesehen ist, dass über dem zum Anfördern der vollen Formen vorgesehenen Kettentrumms ein geschlossener Kettenring angeordnet ist, ueber dessen unteres Trumm die mit Schokolade gefüllte Formen geführt werden, während im oberen Trumm dieses Kettenringes die leeren Formen geführt werden, dass zwischen der unteren Förderkette und dem darüberliegenden Kettenring eine Vorrichtung zur Aufnahme der mit Schokolade gefüllten Formen sowie der leeren Formen vorgesehen ist und diese Vorrichtung für die Aufnahme der Formen zur Durchführung einer gesteuerten Schwenkbewegung um 180° antreibbar ist.

Weitere Merkmale der Erfindung ergeben sich aus dem Unteranspruch und der nachstehenden Beschreibung.

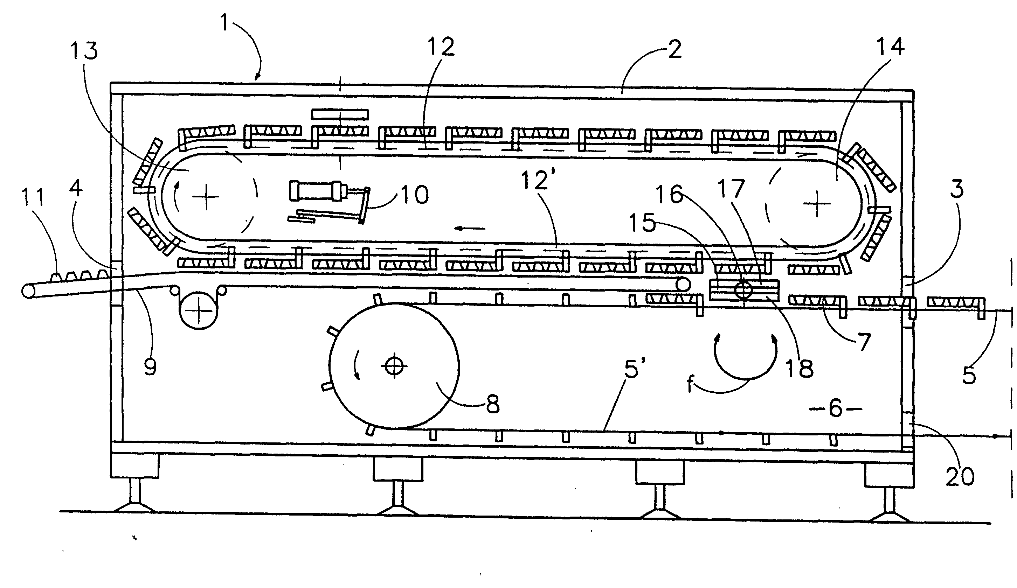

Anhand der beigefügten Zeichnung soll nun anhand eines Beispieles einer bevorzugten Ausführungsform der Gegenstand der Erfindung näher beschrieben und erläutert werden.

Die einzige Figur in der beigefügten Zeichnung zeigt eine Ansicht der erfindungsgemässen Austafeleinrichtung.

Die insgesamt mit 1 bezeichnete Austafeleinrichtung besteht aus einem im wesentlichen geschlossenen oder abgekapselten Raum 2, der klein gehaltene Eintrittsöffnung 3 sowie klein gehaltene Austrittsöffnungen 4, 20 aufweist.

In üblicher Weise werden über ein Kettenpaar 5 durch die Eintrittsöffnung 3 Formen 7 schrittweise zum Inneren 6 des Raumes 2 gefördert. Die Öffnungen der das Schokoladenprodukt enthaltenden Ausnehmungen dieser Formen sind nach oben gerichtet. Über ein Umlenkrad 8 wird die Förderkette 5 umgelenkt, um mit dem unteren Kettentrumm 5' aus dem Raum 6 auszutreten.

In herkömmlicher Weise ist in der Nähe der Kette 5 ein an sich bekanntes Förderband 9 vorgesehen, das im Bereich einer üblichen Ausschlagvorrichtung 10 die Schokoladenerzeugnisse 11 aufnimmt.

Über dem Kettentrumm 5, 5' und dem Band 9 ist ein geschlossener Ring vorgesehen, der aus zueinander parallel verlaufenden, über Umlenkräder 13 und 14 geführten Ketten 12, besteht.

Sowohl das Kettenpaar 5 als auch das Kettenpaar 12 weisen bekannte Mittel zur lösbaren Aufnahme der Formen 7 auf.

Zwischen den Förderketten 5 und der ringförmig angeordneten Kette 12 ist eine Kippvorrichtung 15 vorgesehen, die um Drehzapfen 16 in Pfeilrichtung f verschwenkbar ist.

Die Kippvorrichtung weist eine Führung 17 sowie eine Führung 18 auf, die parallel zueinander verlaufen. In die Führungen 17, 18 sind die Formen 7 einsetzbar.

Die beschriebene Austafeleinrichtung arbeitet in folgender Weise:

Über die Ketten 5 werden die Formen 7 mit gefüllten und nach oben offenen Ausnehmungen angefördert. Die Ketten 5 führen eine intermittierende Bewegung aus. Sobald die Form 7 an der Kippvorrichtung 15 angelangt ist, nehmen im Anschluss die Ketten 5 die entsprechende Form 7 aus der unteren Führung 18 mit. Durch eine gesteuerte Bewegung (Pfeilrichtung f) wird die Vorrichtung 15 um den Drehzapfen 16 geschwenkt, so dass die gefüllte und nun mit nach unten gerichteten Ausnehmungen der umgekippte Form in der Nähe des unteren Anfangsteiles des Trumms 12' der Ketten 12 geführt wird.

Die umgekippte, gefüllte Form 7 wird an die Ketten 12 abgegeben, um zur Ausschlagvorrichtung 10 gefördert zu werden. Die Ausschlagvorrichtung wirkt auf den Boden der Form mit nach unten, d.h. zu dem Band 9 gerichteten Ausnehmungen ein, so dass die ausgeformten Schokoladenerzeugnisse 11 auf das Band 5 fallen können.

Nach der Ausschlagvorrichtung 10 werden die leeren Formen 7 am oberen Trumm des Kettenringes 12 entlang geführt, bis sie in bekannter Weise die Kippvorrichtung 15 erreichen.

Da die Ketten 5 und 12 synchron angetrieben werden, erfolgt gleichzeitig mit der intermittierenden Zuführung einer Form 7 durch die Ketten 5 und Abgabe der Formen an die unteren Führungen 18, ein Einführen einer leeren Form 7 in die oberen Führungen 17 der Kippvorrichtung 15. Wird dann eine gefüllte Form 7 durch die Vorrichtung 15 gekippt und an die Ketten 12 abgegeben, so wird gleichzeitig erreicht, dass eine sich in der oberen Führung 17 der Vorrichtung 15 befindliche, leere Form 7 an die darunter liegenden Ketten 5 abgegeben wird.

Die leere Form 7 bewegt sich dann in Richtung des Umlenkrades 8, um (durch das Kettentrumm 5' abgestützt) durch die untere Öffnung 20 aus dem Inneren 6 des Raumes 2 herauszutreten.

Mit der Vorrichtung, die äusserst geringe Abmessungen aufweist, ist es daher bei einer intermittierend arbeitenden Austafelanlage möglich, eine volle Form 7 von Förderketten 5 zu entnehmen, die Form 7 umzukippen und an ein darüber angeordnetes Kettentrumm 12' eines Kettenringes 12 abzugeben, während gleichzeitig eine von dem Kettentrumm 12' zugeführte leere Form 7 durch die Kippvorrichtung 15 aufgenommen wird und nach einer Schwenkbewegung der Kippvorrichtung 15 erneut an die Ketten 5 abgegeben wird, um die leere Form 7 anschliessend aus dem Inneren 6 des Raumes 2 abzufördern.

## Patentansprüche

1. Austafeleinrichtung für eine Einformanlage für Schokolade oder ähnliche Erzeugnisse, **dadurch gekennzeichnet, dass** im Inneren eines Raumes (2) einer Austafeleinrichtung (1) ein Umlenkrad (8) vorgesehen ist, über das eine Kette (5, 5') geführt ist, die mit ihrem oberen Trumm (5) die mit Schokolade gefüllten Formen (7) anfördert, dass das untere Trumm (5') der Kette zur Abfuhr der leeren Formen (7) dient, und über dem, zur Anfuhr der vollen Formen (7) vorgesehenen Kettentrumms (5) ein geschlossener Kettenring (12) angeordnet ist, durch dessen unteres Trumm (12') die mit Schokolade gefüllten Formen (7) geführt sind, während im oberen Trumm (12) dieses Kettenringes die leeren Formen (7) geführt werden, dass zwischen der unteren Förderkette (5) und dem darüberliegenden Kettenring (12) eine Vorrichtung (15) zur Aufnahme der mit Schokolade gefüllten Formen (7) sowie der leeren Formen (7) vorgesehen ist und diese Vorrichtung (15) zur Aufnahme der Formen (7) zur Durchführung einer gesteuerten Schwenkbewegung um 180° antreibbar ist.

2. Austafeleinrichtung nach Anspruch 1, **dadurch gekennzeichnet**, dass die Vorrichtung (15) eine Führung (17) sowie eine Führung (18) aufweist, dass die Führungen (17, 18) zueinander parallel angeordnet sind und die über das Kettentrumm (5) zugeführten Formen (7) sowie die über den Kettenring (12) zugeführten Formen (7) aufnehmen und die Vorrichtung (15) mittels eines Drehzapfens (16) schwenkbar gelagert ist.

## Claims

1. Demoulding device for a moulding machine for chocolate or similar products, **characterized in that** a deflecting wheel (8) is provided in the interior of a space (2) in a demoulding device (1), the said deflecting wheel being used to guide a chain (5, 5') which uses its upper strand (5) to convey the moulds (7) filled with chocolate, **in that** the lower strand (5') of the chain is used for taking away the empty moulds (7), and above the chain strand (5) provided for the transportation of the full moulds (7) there is arranged a closed chain ring (12) whose lower strand (12') is used to guide the moulds (7) filled with chocolate while the empty moulds (7) are guided in the upper strand (12) of this chain ring, **in that** an apparatus (15) for receiving the moulds (7) filled with chocolate and the empty moulds (7) is provided between the lower conveying chain (5) and the chain ring (12) situated above it, and this apparatus (15) for receiving the moulds (7) can de driven in order to carry out a controlled pivoting movement through 180°.

2. Demoulding device according to Claim 1, **characterized in that** the apparatus (15) has a guide (17) and a guide (18), **in that** the guides (17, 18) are arranged parallel to each other and receive the moulds (7) supplied via the chain strand (5) and the moulds (7) supplied via the chain ring (12), and the apparatus (15) is mounted in a manner such that it can pivot by means of a pivot pin (16).

## Revendications

1. Dispositif de démoulage pour une installation de moulage de chocolat ou de produits similaires, **caractérise en ce que** l'on prévoit à l'intérieur d'un espace (2) d'un dispositif de démoulage (1) une roue déflectrice (8) sur laquelle est guidée une chaîne (5, 5') qui apporte avec sa portion supérieure (5) les moules (7) remplis de chocolat, **en ce que** la portion inférieure (5') de la chaîne sert à évacuer les moules vides (7), et une boucle de chaîne (12) fermée est disposée par-dessus la portion de chaîne (5) prévue pour l'apport des moules pleins (7), les moules (7) remplis de chocolat étant guidés à travers sa portion inférieure (12'), tandis que dans la portion supérieure (12) de cette boucle de chaîne les moules vides (7) sont guidés, **en ce qu'**entre la chaîne d'amenée inférieure (5) et la boucle de chaîne (12) se trouvant au-dessus d'elle on prévoit un dispositif (15) pour recevoir les moules (7) remplis de chocolat ainsi que les moules vides (7), et ce dispositif (15) pour recevoir les moules (7) peut être entraîné pour réaliser un mouvement de pivotement contrôlé de 180°.

2. Dispositif de démoulage selon la revendication 1, **caractérisé en ce que** le dispositif (15) présente un guide (17) ainsi qu'un guide (18), **en ce que** les guides (17, 18) sont disposés parallèlement l'un à l'autre et reçoivent les moules (7) amenés par le biais de la portion de chaîne (5) ainsi que les moules (7) amenés par la boucle de chaîne (12) et le dispositif (15) est monté de manière pivotable au moyen d'un pivot (16).
